Europäisches Patentamt

European Patent Office

Office européen des brevets

(19)

(11) Veröffentlichungsnummer: **0 150 062**
**A2**

(12) ## EUROPÄISCHE PATENTANMELDUNG

(21) Anmeldenummer: 85100515.7

(22) Anmeldetag: 18.01.85

(51) Int. Cl.⁴: **D 04 B 21/16**
**B 65 G 15/38**

(30) Priorität: 20.01.84 PL 245869

(43) Veröffentlichungstag der Anmeldung:
31.07.85 Patentblatt 85/31

(84) Benannte Vertragsstaaten:
AT BE CH DE FR GB IT LI NL SE

(71) Anmelder: Centralny Osrodek Badawczo-Rozwojowy
Technicznych Wyrobow Wlokienniczych
ul. M. Curie-Sklodowskiej 3/5
Lodz(PL)

(71) Anmelder: Zyrardowskie Zaklady Tkanin Technicznych
im. M. Kasprzaka
ul. Okrzei 51
Zyrardow(PL)

(72) Erfinder: Romalski, Witold
ul. Srodkowa 25/27 m. 19
Zyrardów(PL)

(72) Erfinder: Kowalewski, Stanislaw, Dipl.-Textiling
ul. Kosciuszki 15/17 m. 38
Zyrardów(PL)

(72) Erfinder: Piotrowski, Jan
Al. Tysiaclecia 2 m. 14
Piastów(PL)

(72) Erfinder: Moczulski, Antoni
ul. Rewolucji Pazdziernikowej 64 m. 16
Zyrardów(PL)

(72) Erfinder: Zyska, Bronislaw Prof. Dr. hab. Mikrobiologe
ul. Wolnosci 47
Chorzów(PL)

(72) Erfinder: Stasinski, Andrzej, Dipl.-Textiling
ul. Grabieniec 16 m. 114
Lódz(PL)

(72) Erfinder: Ostaszewski, Leszek, Dr. Dipl.-Textiling
ul. Pojezienska 26 m. 1
Lódz(PL)

(72) Erfinder: Redlich, Grazyna, Dipl.-Textiling
ul. Kusocinskiego 80 m. 55
Lódz(PL)

(72) Erfinder: Juszczyk, Jadwiga, Dipl.-Textiling
ul. Lermontowa 12 m. 35
Lódz(PL)

(72) Erfinder: Zajac, Emil, Dipl.-Ing.
ul. Przodowników Pracy 6 m. 7
Bydgoszcz(PL)

(72) Erfinder: Cisak, Barbara
ul. Szpitalna 5 m. 50
Bydgoszcz(PL)

(72) Erfinder: Skalecki, Zenon
ul. Olszewskiego 3 m. 54
Bydgoszcz(PL)

(72) Erfinder: Cichomski, Stanislaw, Dr. Ing.
ul. Topolowa 15 m. 9
Katowice(PL)

(72) Erfinder: Królikowski, Andrzej
ul. Namiarkowa 1
Bedzin(PL)

(74) Vertreter: Hansen, Bernd, Dr.rer.nat. et al,
Hoffmann, Eitle & Partner Patentanwälte Arabellastrasse
4
D-8000 München 81(DE)

(54) **Nähwirkstoff für Umlegearbeiten für schwer brennbare Förderbänder.**

(57) Nähwirkstoff für Umlegearbieten für schwer brennbare Gummi- oder PVC-Bänder, der so konstruiert ist, dass seine Oberfläche eine faserige Schicht darstellt und zwei grundsätzliche Anordnungen von Garnen, bevorzugt mit einem Kern mit einem niedrigen thermischen Krumpfen, beständig mittels Fäden aus synthetischer Seide oder einem Zwirn, vorteilhafterweise mit einem niedrigen thermischen Krumpfen, verbunden sind.

Der Nähwirkstoff dient zur Herstellung von Förderbändern, hauptsächlich für PVC-Förderbänder, welche für den Grubenbergbau bestimmt sind.

# Nähwirkstoff für Umlegearbeiten für schwer brennbare Förderbänder

Gegenstand der Erfindung bildet ein Nähwirkstoff für schwer brennbare Förderbänder, insbesondere für den Bergbau, mit einer solchen Konstruktion und Struktur, welche eine hohe Aufreissbeständigkeit und Zugfestigkeit, eine hohe Adhäsion zu Kunststoff sowie PVC oder Gummi, eine erhöhte Brennbeständigkeit, und vor allen Dingen eine minimale Dehnung, eine hohe Ermüdungsfestigkeit, eine vergrösserte Durchbruchsfestigkeit gewährleistet.

Aus PL-PS 114 424 ist ein Verfahren für Gewebeumlegearbeiten für schwer brennbare Förderbänder bekannt, welche eine erhöhte Schwerbrennbarkeit und Adhäsion zu Belegungsstoffen gegenüber den traditionellen Geweben besitzt.

Dort wurde die Schwerbrennbarkeit sowie die Adhäsion zu Belegungsstoffen dadurch verbessert, dass man Stapelviskosefasern in die Struktur des Gewebes in einer durchschnittlichen Menge von etwa 32%, bezogen auf die Masse der Oberfläche des Gewebes, eingeführt hat.

Einen Nachteil des Gewebes bilden ungüstig hohe Dehnungen, welche eine Steigerung der Dehnung von fertigen Bändern von über 3% verursachen, sowie eine niedrige Ermüdungsfestigkeit in Abhägigkeit von der Anzahl von Verbiegungen. Dies verursacht auch eine wesentliche Erniedrigung der technischen Benutzungsparameter der Förderbäder.

Eine andere negative Eigenschaft ist die verhältnismässig komplizierte Herstellung von Geweben für Förderumlegearbeiten, welche eine Anpassung und Verstärkung der einzelnen Elemente von Webmaschinen erfordern, um ihren schnellen Verbrauch dadurch zu vermeiden, sowie einen hohen Arbeitsaufwand erfordern und eine niedrige Effektivität des Herstellungsprozesses ergeben.

Aufgabe der vorliegenden Erfindung ist es, eine Nähwirkstoffkonstruktion für Umlegearbeiten für schwer brennbare Förderbänder zu schaffen, welche neben einer hohen Aufreisskraft, einer grossen Verwandschaft zu Kunststoffen und Gummi, einer verstärkte Brennbeständigkeit, vor allen Dingen einer hohen Dauerbiegebeständigkeit, eine minimale Dehnung und hohe Durchschlagsbeständigkeit gewährleistet.

Die vorstehende Aufgabe wird durch einen Textilnähwirkstoff für Umlegearbeiten gelöst, bei welchem mindestens zwei Schichten von parallel angeordneten, durcheinander nicht-flottierten Garnen, bevorzugt aus synthetischer Seide mit niedrigen thermischen Krumpfen mit einer faserigen Schicht umgeben mittels des Fadens aus synthetischer Seide, bevorzugt mit niedrigen thermischen Krumpfen, oder mit einem angedrehten Garn beständig verbunden sind.

0150062

Der gemäss der Erfindung hergestellte Nähwirkstoff ist dadurch gekennzeichnet, dass seine Oberfläche faserig ist, und dass seine Bestandsanordnugen bei der Anwendung beständig verbunden sind:

1) - auf die obere Anordnung: Melangiergarn aus chemischen Fasern, bevorzugt mit einem Kern von einem niedrigen thermischen Krumpfen, bestehend aus einigen Bestandgarnen im Andrehungsverfahren verbunden von der gesamten linearen Masse von 500 bis 1.100 tex,

   - auf die untere Anordnung des Melangiergarnes aus chemischen Fasern, bevorzugt mit einem Kern mit einem niedrigen thermischen Krumpfen, einfach oder Zwirn, von der linearen Masse im Bereich von 100 bis 500 tex,

2) - auf die Verbindungsanordnung - des Fadens aus synthetischer Seide oder aus Zwirn bevorzugt mit einem niedrigen thermischen Krumpfen von der linearen Masse im Bereich von 40 bis 200 tex,

3) - die Anzahl der Verbindungspunkte für 1 cm$^2$ Oberfläche des Erzeugnisses von 4 bis 20.

Lösungsbeispiel

   - Die obere Anordnung: Melangiergarn aus chemischen Fasern 270 x 3 tex;

   - die untere Anordnung: Melangiergarn aus chemischen Fasern 150 x 1 tex;

- 4 -

- die Verbindungsanordnung: niedrigkrumpfige synthetische Seide 940 dtex;

- Verdichten von Garnanordnungen für 1 dmc:
die obere - 60 bis 120, vorteilhaft 84 $\pm$ 3,
die untere - 150 bis 200, vorteilhaft 162 $\pm$ 8;
die Verbindungsschicht - 20 bis 40, vorteilhaft 28 $\pm$ 2;
- die Aufreisskraft in länglicher Richtung; Bereich von 250 bis 500 daN/cm (bei 84 Fad/dcm - 300 daN),
- die Aufreisskraft in Querichtung: Bereich von 80 bis 200 daN/cm (bei 162 Fad/dcm - 110 daN);
- Dehnung in der Längsrichtung: nicht mehr als 35%,
- Dehnung in der Querrichtung: nicht mehr als 30%.

In dem nach der vorliegenden Erfindung hergestellten Nähwirkstoff steigt die mit dem Belegungstoff verbundene Kraft - also Beständigkeit gegen Schichtentrennung um etwa 30% gegenüber den Anwendungslösungen von Gewebe für Umlegearbeiten.

Die Ermüdungsbeständigkeit von fertigen Förderbändern auf einer Nähwirkstoffumlegearbeit gemessen mit der Anzahl von Verbiegungen steigt etwa 5-fach gegenüber den Bändern mit den Gewebeumlegearbeiten.

Bei deiner Anwendung des Nähwirkstoffes gemäss der vorliegenden Erfindung erreicht die relative Dehnung des Bandes den Wert bis 3% und ist um etwa 30% niedriger gegenüber den Bändern mit den Gewebeumlegearbeiten.

0150062

Die Brennbarkeitskennziffer, gemessen mit der Löschzeit des fertigen Übertragungsbandes, auf der Basis
der Umlegearbeiten nach der vorliegenden Erfindung,
beträgt 2,5 Sek., und ist um 1 Sek. kürzer gegenüber
den Bändern mit den schwer brennbaren Gewebeumlegearbeiten.

0150062

Patentanspruch

Nähwirkstoff für Umlegearbeiten für schwer brennbare Förderbänder, dadurch  g e k e n n z e i c h -
n e t ,  dass seine Oberfläche eine Faserschicht darstellt, und dass zwei Grundanordnungen von Garnen, bevorzugt mit einem Kern mit niedrigem thermischen Krumpfen, mittels Fäden aus synthetischer Seide oder mit
Zwirn, bevorzugt mit einem niedrigen thermischen Krumpfen, von der linearen Masse von 40 bis 200 tex bei
der Anzahl von Verbindungspunkten für 1 cm$^2$ Oberfläche des Erzeugnisses von 4 bis 20 beständig verbunden
ist, wobei die obere Anordnung aus einigen Bestandgarnen im Andrehungsverfahren von der gesamten linearen
Masse von 500 bis 1.100 tex und die untere Anordnung
aus einfachem oder Zwirngarn von der linearen Masse
von 100 bis 500 tex gebildet ist.